# EUROPÄISCHE PATENTSCHRIFT

(11) **EP 2 616 682 B1**
(45) Veröffentlichungstag und Bekanntmachung des Hinweises auf die Patenterteilung: **07.09.2016**
(21) Anmeldenummer: 11734076.0
(22) Anmeldetag: 18.07.2011
(51) Int. Cl.: F04B 53/12

(54) **VERFAHREN ZUR HERSTELLUNG EINER KOLBENPUMPE UND KOLBENPUMPE**
PROCESS FOR PRODUCING A PISTON PUMP AND A PISTON PUMP
PROCÉDÉ DE FABRICATION D'UNE POMPE À PISTON ET UNE POMPE À PISTON

(30) Priorität: 15.09.2010 DE 102010040819
(43) Veröffentlichungstag der Anmeldung: 24.07.2013
(73) Patentinhaber: Robert Bosch GmbH, 70442 Stuttgart (DE)
(72) Erfinder: HUCKENBECK, Bernard, 87480 Weitnau (DE); ZIMMERMANN, Marc, 87527 Sonthofen (DE); JURETKO, Martin, 31134 Hildesheim (DE)
(86) Internationale Anmeldenummer: PCT/EP2011/062241
(87) Internationale Veröffentlichungsnummer: WO 2012/034739

(56) Entgegenhaltungen:
- EP-A1- 0 699 494
- DE-A1-102006 016 290
- DE-A1-102007 047 418
- DE-A1-102008 015 547

## Beschreibung

### Stand der Technik

Die Erfindung geht aus von einem Verfahren zur Herstellung einer Kolbenpumpe nach der Gattung des unabhängigen Patentanspruchs 1 welche nach einem derartigen Verfahren hergestellt ist.

In der Offenlegungsschrift DE 10 2007 047 418 A1 wird eine Kolbenpumpe mit einem Gehäuse, einer in dem Gehäuse verschiebbar geführten Kolbenbaugruppe und einem Einlassventil beschrieben. Die Kolbenbaugruppe umfasst ein erstes stangenförmiges Kolbenelement und ein über einen Presssitz mit dem ersten Kolbenelement verbundenes, zweites Kolbenelement, in welchem Querbohrungen und eine mit den Querbohrungen korrespondierende Längsbohrung angeordnet sind. Das Einlassventil umfasst ein Aufnahmeelement, in welchem eine Einlassventilfeder und ein Einlassventildichtelement angeordnet sind, und einen korrespondierenden Einlassventilsitz, welcher an dem zweiten Kolbenelement angeordnet ist. Das zweite Kolbenelement ist als Hülse aus einem verschleißfesten Material ausgeführt, welches axial wirkende Kraftkomponenten aufnimmt, wobei der Einlassventilsitz an einer Biegekante des als Hülse ausgeführten zweiten Kolbenelements angeordnet ist. Das als Hülse ausgeführte zweite Kolbenelement ist in einem Tiefziehverfahren oder einem Kaltschlagverfahren hergestellt, wobei die Querbohrungen in das Kolbenelement gestanzt oder gebohrt sind.

In der DE 10 2008 015 547 A1 wird eine Hochdruckpumpe beschrieben, die insbesondere als Radial- oder Reihenkolbenpumpe für Brennstoffeinspritzanlagen von luftverdichtenden, selbstzündenden Brennkraftmaschinen dient. Die beschriebene Hochdruckpumpe weist eine Pumpenbaugruppe und eine Antriebswelle auf. Ferner ist an der Antriebswelle ein der Pumpenbaugruppe zugeordneter Nocken vorgesehen, wobei die Pumpenbaugruppe einen Kolben und einen Stößelkörper aufweist, die über eine am Nocken entlang laufende Rolle vom No-cken angetrieben sind. Dabei ist der Stößelkörper in einer Führungsbohrung eines Gehäuseteils geführt. Ferner nimmt der Stößelkörper den Kolben bei seiner Bewegung mit. Der Stößelkörper ist abschnittsweise exzentrisch zu einer Achse der Führungsbohrung ausgestaltet, wobei die Führungsbohrung ebenfalls abschnittsweise exzentrisch ausgestaltet ist und die Ausgestaltung des Stößelkörpers angepasst ist. Der exzentrische Abschnitt des Stößelkörpers ist durch einen Exzenterring gebildet, wobei der Exzenterring mit einem zylinderhülsenförmigen Grundkörper des Stößelkörpers verbunden ist indem der Exzenterring in den zylinderförmigen Grundkörper des Stößelkörpers eingepresst oder auf diesen aufgepresst ist. Der asymmetrische Abschnitt der Führungsbohrung ist mit einem einzigen Stufenwerkzeug durch Achsverschiebung hergestellt.

In den Offenlegungsschriften DE 10 2006 016 290 A1 und EP 0 699 494 A1 werden jeweils mehrteilige Schaftwerkzeuge zur spanabhebenden Bearbeitung zumindest eines ersten, innenliegenden Bereichs, wie beispielsweise einer auf Präzision zu bearbeitenden Bohrung, und eines zweiten, radial weiter außenliegenden Bereichs, wie beispielsweise einer zu dieser Bohrung im engen Planschlag stehenden Referenzfläche beschrieben. Die beschriebenen mehrteiligen Schaftwerkzeuge werden als Stufenwerkzeug zur Komplettbearbeitung eines Zylinderkopfs eingesetzt.

### Offenbarung der Erfindung

Das erfindungsgemäße Verfahren mit den Merkmalen des unabhängigen Patentanspruchs 1 hat demgegenüber den Vorteil, dass im Zuge einer Bearbeitung des zweiten Kolbenelements der Presssitz und die Längsbohrung in einem Arbeitsschritt hergestellt werden. In vorteilhafter Weise ermöglicht das erfindungsgemäße Verfahren eine einfache und kostengünstige Herstellung der Kolbenpumpe. Insbesondere ist eine individuelle Bearbeitung des zweiten Kolbenelements der Kolbenbaugruppe der Kolbenpumpe möglich, wodurch sich insbesondere ein optimierter Saugbereich der Kolbenpumpe ergibt. Insbesondere ergibt sich in vorteilhafter Weise eine Kolbenpumpe, die druckbeständig bis gegen 500 bar ausgeführt werden kann. Besonders vorteilhaft ist, dass in diesem Arbeitsschritt zusätzlich die Anschlagkante für das Gehäuse hergestellt und/oder endbearbeitet werden kann.

Erfindungsgemäß wird vorgeschlagen, dass das hülsenförmig ausgeführte zweite Kol-benelement in einem spanenden Fertigungsverfahren hergestellt wird, wodurch sich eine einfache und kostengünstige Herstellung des Bauteils ergibt.

In vorteilhafter Ausgestaltung des erfindungsgemäßen Verfahrens wird in einem weiteren Arbeitsschritt ein Ringkanal im Zuge einer Bearbeitung einer Außenmantelfläche des zweiten Kolbenelements durch Einstechen hergestellt und/oder endbearbeitet. Zur besseren Medienführung zwischen Filter und Einlassventilsitz erfolgt in vorteilhafter Weise in einem einfachen Herstellprozess durch Drehen ein Einstich am Außenumfang des zweiten Kolbenelements, wodurch ein Ringkanal erzeugt wird, welcher insbesondere den Strömungswiderstand in der Kolbenpumpe reduziert.

In weiterer vorteilhafter Ausgestaltung des erfindungsgemäßen Verfahrens wird in einem weiteren Arbeitsschritt die mindestens eine Querbohrung hergestellt und/oder endbearbeitet. Die Medienverbindung zwischen dem Ringkanal und der Längsbohrung erfolgt in vorteilhafter Weise in einem einfachen Herstellprozess, indem mehrere Querbohrungen den Ringkanal mit der Längsbohrung verbinden. Besonders günstig wirkt sich der Einstich des Ringkanals, die Querbohrung und die große Längsbohrung aus, welche zu kleiner Wandstärke führen und demzufolge zu einem reduzierten Strömungswiderstand im Kolben bzw. in der Kolbenpumpe.

Ferner wird vorgeschlagen, dass in einem weiteren Arbeitsschritt zumindest ein Innenflächenbereich des zweiten Kolbenelements entgratet wird. Der Grat an der Verschneidung der Längsbohrung zur Querbohrung kann besonders einfach und günstig mittels eines speziellen Fräswerkzeugs definiert entfernt werden, wodurch sich ein reduzierter Strömungswiderstand ergibt.

Eine bevorzugte Realisierung des erfindungsgemäßen Verfahrens sieht vor, dass das hülsenförmig ausgeführte zweite Kolbenelement als Drehteil hergestellt wird, wodurch sich eine einfache, insbesondere für die Serienfertigung taugliche Herstellung des Bau-teils ergibt.

Bevorzugt erfolgt die Bearbeitung des Kolbenelements zumindest teilweise mit einem Stufenwerkzeug. In vorteilhafter Weise erfolgt die Herstellung des zweiten Kolbenelements mit einem Stufenwerkzeug in einem Prozess- bzw. Arbeitsschritt, wobei der Presssitz, die Querbohrungen, die Längsbohrung und/oder die Anschlagkante gleichzeitig hergestellt werden können. Dadurch kann ein multifunktionelles Kolbenelement in kurzen Bearbeitungszyklen in hohen Stückzahlen besonders präzise und kostengünstig hergestellt werden.

Vorteilhafte Ausführungsformen der Erfindung sind in den Zeichnungen dargestellt und werden nachfolgend beschrieben. In den Zeichnungen bezeichnen gleiche Bezugszeichen Komponenten bzw. Elemente, die gleiche bzw. analoge Funktionen ausführen.

### Kurze Beschreibung der Zeichnungen

Figur 1 zeigt eine schematische perspektivische Darstellung einer erfindungsgemäß hergestellten Kolbenpumpe.
Figur 2 zeigt einen Querschnitt durch einen ersten Gehäuseabschnitt der Kolbenpumpe, in welchem eine Kolbenbaugruppe mit einem ersten und einem zweiten Kolbenelement geführt sind, und einen Teil eines Einlassventils der Kolbenpumpe.
Fig. 3 zeigt einen Querschnitt durch das zweite Kolbenelement mit einem Einlassventilsitz, an welchem ein Einlassventildichtelement des Einlassventils anliegt.
Fig. 4 zeigt eine schematische perspektivische Darstellung des zweiten Kolbenelements mit einem Werkzeug zur Entgratung eines Innenflächenbereichs des Kolbenelements.

### Ausführungsformen der Erfindung

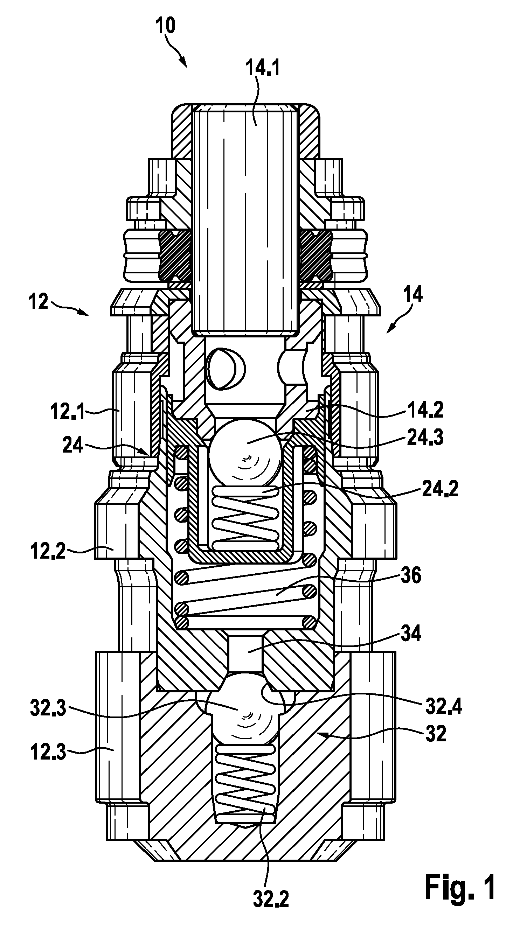

Wie aus Fig. 1 ersichtlich ist, umfasst eine erfindungsgemäß hergestellte Kolbenpumpe 10 eine Kolbenbaugruppe 14, ein Einlassventil 24, ein Auslassventil 32 und ein Gehäuse 12. Da derartige Kolbenpumpen in Aufbau und Funktion an sich bekannt sind, beschränken sich Zeichnung und Beschreibung zur klaren Darstellung der Erfindung auf den erfindungsrelevanten Teil der Kolbenpumpe 10.

Die beschriebene Pumpe kann beispielsweise als Förder- oder Rückförderpumpe eines hydraulischen Pumpsystems eines Fahrzeugs eingesetzt werden. Die Pumpe 10 wird beispielsweise in Pumpsystemen der modernen Fahrzeugtechnik eingesetzt, welche beispielhaft die Sicherheitstechnologien wie ABS (Anti-Blockier-System), ESP (elektronisches Stabilisierungsprogramm), EHB (elektrohydraulische Bremse), TCS (Traction Control System) oder ASR (Antischlupfregelung) betreffen.

Das Gehäuse 12 umfasst mehrere Gehäuseabschnitte 12.1, 12.2 und 12.3, welche die Kolbenbaugruppe 14, das Einlassventil 24 und das Auslassventil 32 aufnehmen. Die in einem Gehäuseabschnitt 12.1 des Gehäuses 12 verschiebbar geführte Kolbenbaugruppe 14 umfasst ein erstes stangenförmiges Kolbenelement 14.1 und ein über einen Presssitz 16 mit dem ersten Kolbenelement 14.1 fest verbundenes, zweites Kolbenelement 14.2, in welchem mindestens eine Querbohrung 18.1,18.2 und eine mit der mindestens einen Querbohrung 18.1,18.2 korrespondierende Längsbohrung 20 angeordnet ist. Das zweite Kolbenelement 14.2 ist dabei hülsenförmig ausgeführt. Im vorliegenden Ausführungsbeispiel sind mehrere Querbohrungen 18.1, 18.2 im zweiten Kolbenelement 14.2 vorgesehen, die mit der Längsbohrung 20 korrespondieren.

Das Einlassventil 24 der erfindungsgemäßen Kolbenpumpe 10 ist als Rückschlagventil ausgebildet und umfasst ein Aufnahmeelement 24.1, in dem eine Einlassventilfeder 24.2 und ein Einlassventildichtelement 24.3 angeordnet sind, und einen korrespondierenden Einlassventilsitz 24.4. Der Einlassventilsitz 24.4 ist an dem zweiten hülsenförmigen Kolbenelement 14.2 und hierbei vorzugsweise an einer Kante des hülsenförmig ausgeführten zweiten Kolbenelements 14.2 angeordnet. Das Einlassventildichtelement 24.3 ist vorzugsweise als Dichtkugel aufgeführt. Das Einlassventildichtelement 24.3 wird durch eine Federkraft der Einlassventilfeder 24.2 dichtend in den korrespondierenden Einlassventilsitz 24.4 gedrückt.

In vorteilhafter Weise erfüllt das zweite Kolbenelement 14.2 mehrere Funktionen. Das Kolbenelement 14.2 hat die Funktion eines als Längsbohrung ausgeführten Einlasskanales 20 für das Fluid der Kolbenpumpe 10, eines Einlassventilsitzes 24.4 für das Einlassventildichtelement 24.3 des Einlassventils 24, einer Aufnahme für eine nicht näher beschriebene Hochdruckdichtung, eines Presssitzes 16 für das erste Kolbenelement 14.1, eines Ringkanales 26 zur Führung des Fluids der Kolbenpumpe 10 und eines Anschlages für das Gehäuseelement 12.1 bzw. des Filters.

Das Auslassventil 32 ist ebenfalls als federbelastetes Rückschlagventil ausgebildet und in einem Gehäuseabschnitt 12.3 des Gehäuses 12 angeordnet. Das Auslassventil 32 wird geöffnet, wenn ein Druck in einem Kompressionsraum 34 größer als eine auf ein Auslassventildichtelement 32.3 des Auslassventils 32 wirkende Federkraft einer Auslassventilfeder 32.2 ist, wodurch das Auslassventildichtelement 32.3 aus einem an einer Auslassöffnung des Gehäuseabschnitts 12.2 angeordneten Auslassventilsitz 32.4 gedrückt wird.

Wie aus Fig. 1 weiter ersichtlich ist, ist die Kolbenbaugruppe 14 mit dem Einlassventil 24 längsbeweglich im Gehäuse 12 geführt, wobei während eines Saughubs der Kolbenbaugruppe 14 Fluid über das zumindest teilweise als Filterelement ausgebildete Gehäuse 12 bzw. über den zumindest teilweise als Filterelement ausgebildeten Gehäuseabschnitt 12.1 durch einen Ringkanal 26 und die Querbohrungen 18.1, 18.2 im zweiten Kolbenelement 14.2 radial angesaugt und über die mit den Querbohrungen 18.1, 18.2 korrespondierende Längsbohrung 20 durch das geöffnete Einlassventil 24 in den Kompressionsraum 34 geführt wird.

Nach Erreichen eines oberen Totpunktes kehrt sich die Bewegungsrichtung der Kolbenbaugruppe 14 um, so dass das zweite Kolbenelement 14.2 mit dem Einlassventilsitz 24.4 über das durch einen hier nicht dargestellten Exzenter angetriebene erste Kolbenelement 14.1 dichtend auf das Einlassventildichtelement 24.3 gedrückt wird, und das Einlassventil 24 geschlossen wird. Nun erfolgt im Kompressionsraum 34 so lange ein Druckaufbau bis der Druck im Kompressionsraum 34 größer als die Federkraft des Auslassventils 32 ist, wodurch das unter Druck stehende Fluid über das geöffnete Auslassventil 32 aus dem Kompressionsraum 34 in eine nicht dargestellte Auslassleitung geleitet wird.

Nach Erreichen eines unteren Totpunktes kehrt sich die Bewegungsrichtung der Kolbenbaugruppe 14 wieder um, so dass das Auslassventil 32 wieder schließt und der Ansaughub wieder beginnt, wobei eine Rückstellkraft einer im Kompressionsraum 34 angeordneten Rückstellfeder 36, welche beispielsweise als Spiralfeder ausgebildet ist und sich auf einem Boden des Gehäuseabschnitts 12.2 abstützt. Die Rückstellkraft wirkt auf das zweite Kolbenelement 14.2, wodurch die Kolbenbaugruppe 14 wieder in Richtung oberer Totpunkt bewegt wird.

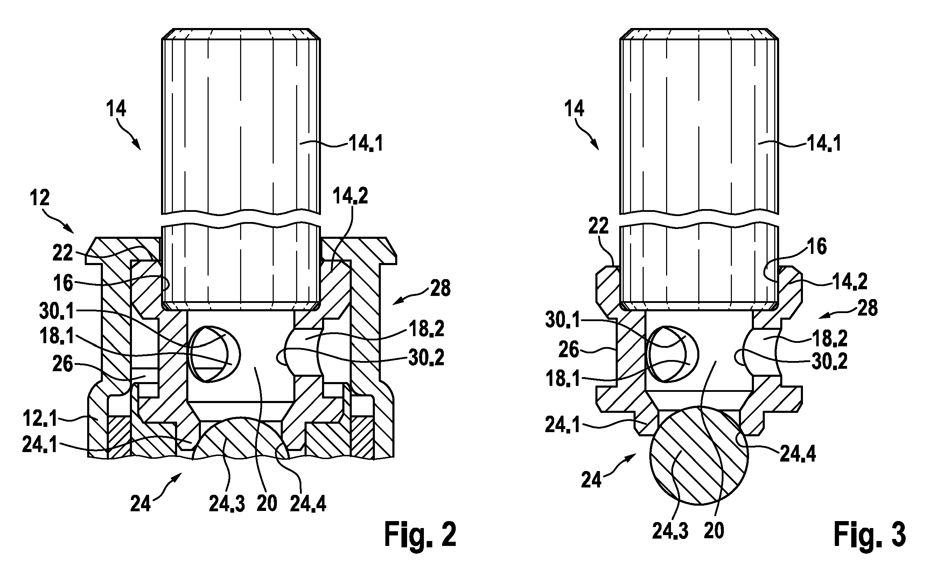

Wie aus Fig. 2 bis 4 ersichtlich ist, wird die Kolbenpumpe 10 nach einem erfindungsgemäßen Verfahren hergestellt. Wie bereits erwähnt wurde, umfasst die Kolbenpumpe 10 das Gehäuse 12, die in dem Gehäuse 12 verschiebbar geführte Kolbenbaugruppe 14 mit dem ersten Kolbenelement 14.1 und dem über den Presssitz 16 formschlüssig mit dem ersten Kolbenelement 14.1 verbundenen, zweiten Kolbenelement 14.2, in welchem die Querbohrungen 18.1,18.2 und die mit den Querbohrungen 18.1,18.2 korrespondierende Längsbohrung 20 angeordnet sind, und das Einlassventil 24, welches das Aufnahmeelement 24.1, in dem die Einlassventilfeder 24.2 und das Einlassventildichtelement 24.3 angeordnet sind, und den korrespondierenden Einlassventilsitz 24.4 umfasst, welcher an dem zweiten Kolbenelement 14.2 angeordnet ist. Der Gehäuseabschnitt 12.1 und das zweite hülsenförmige Kolbenelement 14.2 sind dabei so ausgeführt, dass sich zwischen den beiden Bauteilen 12.1, 14.2 ein Ringkanal 26 ausbildet.

Bei der Herstellung der Kolbenpumpe 10 werden erfindungsgemäß im Zuge einer Bearbeitung des zweiten Kolbenelements 14.2 der Presssitz 16 und die Längsbohrung 20 in einem Arbeitsschritt hergestellt und/oder endbearbeitet. Im gleichen Arbeitsschritt kann zusätzlich zeitgleich die Anschlagkante 22 für das Gehäuse 12 bzw. den Gehäuseabschnitt 12.1 des Gehäuses 12 hergestellt und/oder endbearbeitet werden.

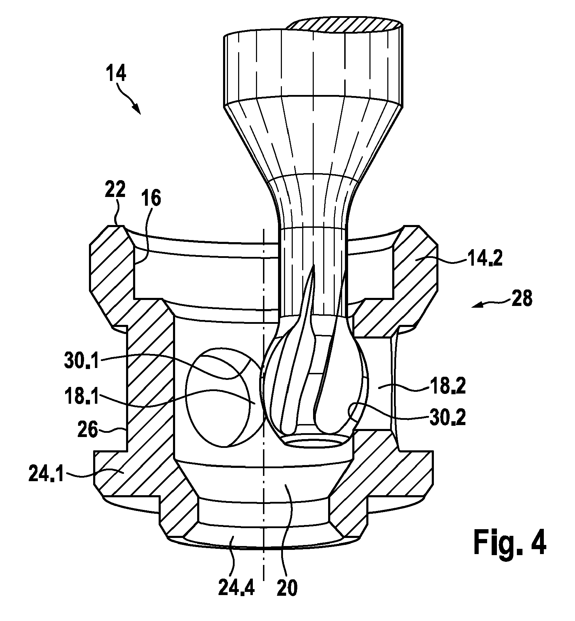

In einem weiteren Arbeitsschritt wird der Ringkanal 26 im Zuge einer Bearbeitung einer Außenmantelfläche 28 des zweiten Kolbenelements 14.2 durch Einstechen hergestellt und/oder endbearbeitet. Die übrige Außenmantelfläche 28 kann dabei im Rohzustand, d.h. ohne eine Weiter- bzw. Feinbearbeitung, verbleiben, da diese Fläche 28 außer einer Haltefunktion im Gehäuseabschnitt 12.1 keine weitere Funktion ausübt. In einem weiteren Arbeitsschritt wird die mindestens eine Querbohrung bzw. werden die Querbohrungen 18.1, 18.2 hergestellt und/oder endbearbeitet. Wie in Fig. 4 ersichtlich, wird in einem weiteren Arbeitsschritt zumindest ein Innenflächenbereich 30.1, 30.2 des zweiten Kolbenelements 14.2 entgratet. Im vorliegenden Ausführungsbeispiel wird vorzugsweise ein Grat an den Querbohrungen 18.1, 18.2 entfernt.

In vorteilhafter Weise ist das hülsenförmig ausgeführte zweite Kolbenelement 14.2 in einem spanenden Fertigungsverfahren herstellbar. Hierbei ist das hülsenförmig ausgeführte zweite Kolbenelement 14.2 als Drehteil herstellbar. Vorzugsweise erfolgt die Bearbeitung des Kolbenelements 14.2 zumindest teilweise mit einem Stufenwerkzeug.

## Patentansprüche

1. Verfahren zur Herstellung einer Kolbenpumpe mit einem Gehäuse (12), einer in dem Gehäuse (12) verschiebbar geführten Kolbenbaugruppe (14) mit einem ersten stangenförmigen Kolbenelement (14.1) und einem über einen Presssitz (16) mit dem ersten Kolbenelement (14.1) verbundenen, zweiten hülsenförmigen Kolbenelement (14.2), in welchem mindestens eine Querbohrung (18.1,18.2) und eine mit der mindestens einen Querbohrung (18.1,18.2) korrespondierende Längsbohrung (20) angeordnet ist und an welchem eine Anschlagkante (22) für das Gehäuse (12) angeordnet ist, und einem Einlassventil (24), welches ein Aufnahmeelement (24.1), in welchem eine Einlassventilfeder (24.2) und ein Einlassventildichtelement (24.3) angeordnet sind, und einen korrespondierenden Einlassventilsitz (24.4) umfasst, welcher an dem zweiten Kolbenelement (14.2) angeordnet ist, **dadurch gekennzeichnet, dass** das hülsenförmig ausgeführte zweite Kolbenelement (14.2) in einem spanenden Fertigungsverfahren hergestellt wird, wobei im Zuge einer Bearbeitung des zweiten hülsenförmigen Kolbenelements (14.2) der Presssitz (16) und die Längsbohrung (20) in einem Arbeitsschritt hergestellt werden.

2. Verfahren nach Anspruch 1, **dadurch gekennzeichnet, dass** in diesem Arbeitsschritt zusätzlich die Anschlagkante (22) für das Gehäuse (12) hergestellt und/oder endbearbeitet wird.

3. Verfahren nach Anspruch 1 oder 2, **dadurch gekennzeichnet, dass** in einem weiteren Arbeitsschritt ein Ringkanal (26) im Zuge einer Bearbeitung einer Außenmantelfläche (28) des zweiten Kolbenelements (14.2) durch Einstechen hergestellt und/oder endbearbeitet wird.

4. Verfahren nach einem der Ansprüche 1 bis 3, **dadurch gekennzeichnet, dass** in einem weiteren Arbeitsschritt die mindestens eine Querbohrung (18.1, 18.2) hergestellt und/oder endbearbeitet wird.

5. Verfahren nach einem der Ansprüche 1 bis 4, **dadurch gekennzeichnet, dass** in einem weiteren Arbeitsschritt zumindest ein Innenflächenbereich (30.1, 30.2) des zweiten Kolbenelements (14.2) entgratet wird.

6. Verfahren nach einem der Ansprüche 1 bis 5, **dadurch gekennzeichnet, dass** das hülsenförmig ausgeführte zweite Kolbenelement (14.2) als Drehteil hergestellt wird.

7. Verfahren nach einem der Ansprüche 1 bis 6, **dadurch gekennzeichnet, dass** die Bearbeitung des Kolbenelements (14.2) zumindest teilweise mit einem Stufenwerkzeug erfolgt.

## Claims

1. Method for producing a piston pump having a housing (12), a piston assembly (14) which is guided displaceably in the housing (12) with a first rod-shaped piston element (14.1) and a second sleeve-shaped piston element (14.2) which is connected to the first piston element (14.1) via a press fit (16), in which second sleeve-shaped piston element (14.2) at least one transverse bore (18.1, 18.2) and a longitudinal bore (20) which corresponds with the at least one transverse bore (18.1, 18.2) are arranged, and on which second sleeve-shaped piston element (14.2) a stop edge (22) for the housing (12) is arranged, and having an inlet valve (24) which comprises a receiving element (24.1), in which an inlet valve spring (24.2) and an inlet valve sealing element (24.3) are arranged, and a corresponding inlet valve seat (24.4) which is arranged on the second piston element (14.2), **characterized in that** the second piston element (14.2) of sleeve-shaped configuration is produced in a material-removing production process, wherein, during machining of the second sleeve-shaped piston element (14.2), the press fit (16) and the longitudinal bore (20) are produced in one working step.

2. Method according to Claim 1, **characterized in that** the stop edge (22) for the housing (12) is produced and/or finished in addition in said working step.

3. Method according to Claim 1 or 2, **characterized in that**, in a further working step, an annular channel (26) is produced and/or finished by grooving during a machining operation of an outer circumferential face (28) of the second piston element (14.2).

4. Method according to one of Claims 1 to 3, **characterized in that**, in a further working step, the at least one transverse bore (18.1, 18.2) is produced and/or finished.

5. Method according to one of Claims 1 to 4, **characterized in that**, in a further working step, at least one inner face region (30.1, 30.2) of the second piston element (14.2) is deburred.

6. Method according to one of Claims 1 to 5, **characterized in that** the second piston element (14.2) of sleeve-shaped configuration is produced as a turned part.

7. Method according to one of Claims 1 to 6, **characterized in that** the machining of the piston element (14.2) takes place at least partially by way of a stepped tool.

## Revendications

1. Procédé de fabrication d'une pompe à piston avec un corps (12), un groupe de piston (14) guidé de façon déplaçable dans le corps (12) avec un premier élément de piston en forme de tige (14.1) et un deuxième élément de piston en forme de douille (14.2) relié au premier élément de piston (14.1) par un ajustement serré (16), dans lequel au moins un alésage transversal (18.1, 18.2) et un alésage longitudinal (20) correspondant audit au moins un alésage transversal (18.1, 18.2) est agencé et sur lequel un bord de butée (22) pour le corps (12) est disposé, et avec une soupape d'entrée (24), qui comprend un élément de réception (24.1), dans lequel un ressort de soupape d'entrée (24.2) et un élément d'étanchéité de soupape d'entrée (24.3) sont disposés, et un siège de soupape d'entrée correspondant (24.4), qui est disposé sur le deuxième élément de piston (14.2), **caractérisé en ce que** le deuxième élément de piston 14.2) réalisé en forme de douille est fabriqué par un procédé de fabrication avec enlèvement de copeaux, dans lequel l'ajustement serré (16) et l'alésage longitudinal (20) sont réalisés en une étape de travail au cours d'un usinage du deuxième élément de piston en forme de douille (14.2).

2. Procédé selon la revendication 1, **caractérisé en ce que** l'on fabrique et/ou on effectue l'usinage de finition du côté de butée (22) pour le corps (12) en outre dans cette étape de travail.

3. Procédé selon la revendication 1 ou 2, **caractérisé en ce que** l'on fabrique et/ou on effectue l'usinage de finition d'un canal annulaire (26) par saignée dans une autre étape de travail, au cours d'un usinage d'une surface latérale extérieure (28) du deuxième élément de piston (14.2).

4. Procédé selon l'une quelconque des revendications 1 à 3, **caractérisé en ce que** l'on fabrique et/ou on effectue l'usinage de finition dudit au moins un alésage transversal (18.1, 18.2) dans une autre étape de travail.

5. Procédé selon l'une quelconque des revendications 1 à 4, **caractérisé en ce que** l'on ébavure au moins une région de surface intérieure (30.1, 30.2) du deuxième élément de piston (14.2) dans une autre étape de travail.

6. Procédé selon l'une quelconque des revendications 1 à 5, **caractérisé en ce que** l'on fabrique le deuxième élément de piston réalisé en forme de douille (14.2) en forme de pièce tournée.

7. Procédé selon l'une quelconque des revendications 1 à 6, **caractérisé en ce que** l'on effectue l'usinage de l'élément de piston (14.2) au moins en partie avec un outil étagé.
